# EUROPÄISCHE PATENTANMELDUNG

(11) **EP 3 834 993 A1**
(43) Veröffentlichungstag der Anmeldung: **16.06.2021**
(21) Anmeldenummer: 19215269.2
(22) Anmeldetag: 11.12.2019
(51) Int. Cl.: B25F 5/00, B24B 23/02

(54) **ELEKTROWERKZEUGGERÄT MIT EINEM MOTOR UND EINEM ROTIERENDEN WERKZEUG**

(71) Anmelder: Hilti Aktiengesellschaft, 9494 Schaan (LI)
(72) Erfinder: Sattler, Christian, 87640 Biessenhofen (DE); Greitmann, Ralf, 86916 Kaufering (DE)
(74) Vertreter: Hilti Aktiengesellschaft Corporate Intellectual Property

(57) **Zusammenfassung**

Die vorliegende Erfindung betrifft ein Elektrowerkzeuggerät mit einem Motor und einem rotierenden Werkzeug. Das Elektrowerkzeug ist dadurch gekennzeichnet, dass eine Drehrichtung des Werkzeugs an dem Elektrowerkzeuggerät einstellbar ist und der Motor ein bürstenloser Motor ist. Die Einstellbarkeit der Drehrichtung des Elektrowerkzeugs bei Verwendung eines bürstenlosen Motors ist mit dem Vorteil verbunden, dass weder ein Getriebe für die Änderung der Drehrichtung, wie bei einem Verbrennungsmotor, erforderlich ist, noch eine Mechanik zur Umschaltung der Kommutierung, wie bei einem Bürstenmotor.

## Beschreibung

Die vorliegende Erfindung betrifft ein Elektrowerkzeuggerät mit einem Motor und einem rotierenden Werkzeug. Das Elektrowerkzeug ist dadurch gekennzeichnet, dass eine Drehrichtung des Werkzeugs an dem Elektrowerkzeuggerät einstellbar ist und der Motor ein bürstenloser Motor ist. Die Einstellbarkeit der Drehrichtung des Elektrowerkzeugs bei Verwendung eines bürstenlosen Motors ist mit dem Vorteil verbunden, dass weder ein Getriebe für die Änderung der Drehrichtung, wie bei einem Verbrennungsmotor, erforderlich ist, noch eine Mechanik zur Umschaltung der Kommutierung, wie bei einem Bürstenmotor.

### Hintergrund der Erfindung:

Im Stand der Technik sind Elektrowerkzeuggeräte bekannt, mit denen Oberflächen bearbeitet oder Untergründe durchtrennt werden können. Diese Elektrowerkzeuggeräte weisen üblicherweise ein rotierendes Werkzeug auf, wie beispielsweise eine Trennscheibe, ein Schneidblatt oder ein Trennblatt. Die aus dem Stand der Technik bekannten Elektrowerkzeuggeräte sind zumeist dadurch gekennzeichnet, dass bei ihnen eine fest definierte Drehrichtung des Werkzeugs vorgegeben ist. Diese Drehrichtung des Werkzeugs kann im Sinne der Erfindung bevorzugt auch als Rotationsrichtung bezeichnet werden. Die fest vorgegebene Drehrichtung des Werkzeugs des Elektrowerkzeuggeräts schränkt allerdings die Nutzerfreundlichkeit des Elektrowerkzeuggeräts dahingehend stark ein, dass das Elektrowerkzeuggerät nur für bestimmte Anwendungsfälle gut eingesetzt werden kann, nämlich für diejenigen Aufgaben, die mit der vorgegebenen Rotationsrichtung des Werkzeugs besonders gut erledigt werden können. Für alle anderen Aufgaben kann die Arbeit mit einem konventionellen Elektrowerkzeuggerät mit fest vorgegebener Drehrichtung des Werkzeugs unter Umständen sehr anstrengend oder beispielsweise mit einer hohen Staubexposition des Nutzers verbunden sein.

Aufgabe der vorliegenden Erfindung ist es, die vorstehend beschriebene Nachteile und Mängel des Standes der Technik zu überwinden und ein Elektrowerkzeuggerät mit einem Motor und einem rotierenden Werkzeug mit einer verbesserten Nutzerfreundlichkeit und einem besondere breiten Anwendungsspektrum bereitzustellen. Das bereitzustellende Elektrowerkzeuggerät soll insbesondere besonders flexibel in verschiedenen Anwendungssituationen einsetzbar sein. Dabei soll der Nutzer zwischen verschiedenen Anwendungsszenarien wählen können, die beispielsweise eine besonders gute Absaugung des anfallenden Staubs ermöglichen oder beispielsweise vom Nutzer als besonders wenig ermüdend empfunden werden.

Die Aufgabe wird durch den Gegenstand des unabhängigen Anspruchs gelöst. Vorteilhafte Ausführungsformen zu dem Gegenstand des unabhängigen Anspruchs finden sich in den abhängigen Unteransprüchen.

### Beschreibung der Erfindung:

Die Aufgabe wird gelöst durch ein Elektrowerkzeuggerät mit einem Motor und einem rotierenden Werkzeug. Das Elektrowerkzeug ist dadurch gekennzeichnet, dass eine Drehrichtung des Werkzeugs an dem Elektrowerkzeuggerät einstellbar ist und der Motor ein bürstenloser Motor ist. Es stellt eine überraschende Innovation im Bereich der bürstenlosen Motoren dar, dass Elektrowerkzeuge bereitgestellt werden können, bei denen die Drehrichtung des rotierenden Werkzeugs eingestellt werden kann. Die Einstellbarkeit der Drehrichtung des Elektrowerkzeugs bei Verwendung eines bürstenlosen Motors ist mit dem Vorteil verbunden, dass weder ein Getriebe für die Änderung der Drehrichtung, wie bei einem Verbrennungsmotor, erforderlich ist, noch eine Mechanik zur Umschaltung der Kommutierung, wie bei einem Bürstenmotor. Dadurch kann ein besonders nutzerfreundliches und flexibel einsetzbares Elektrowerkzeug bereitgestellt werden.

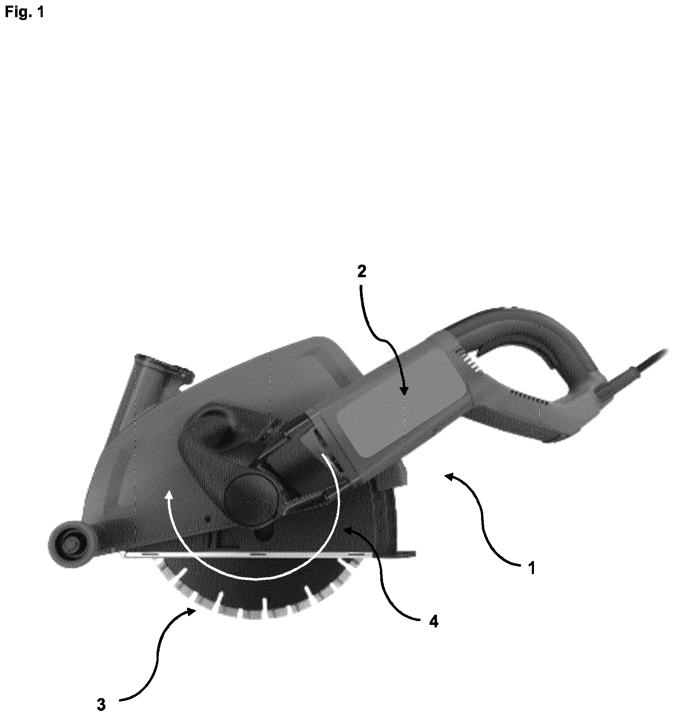

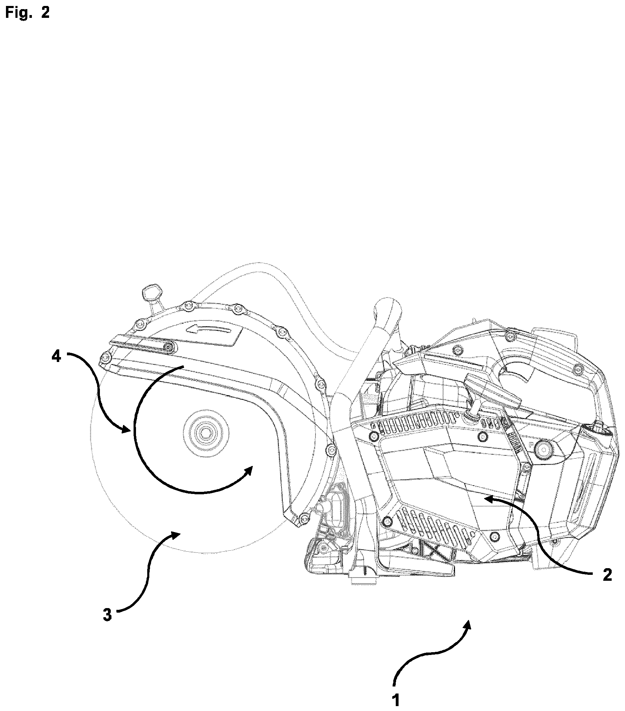

Der Begriff der "Einstellbarkeit der Drehrichtung des Elektrowerkzeugs" bedeutet im Sinne der Erfindung bevorzugt, dass eine Drehrichtung des Werkzeugs des Elektrowerkzeuggeräts in Abhängigkeit von den Erfordernissen der zu erledigenden Aufgabe eingestellt werden kann. Beispielsweise kann eine Drehrichtung "mit dem oder im Uhrzeigersinn" eingestellt werden. Für andere Anwendungsfälle kann es bevorzugt sein, dass die Rotationsrichtung "gegen den Uhrzeigersinn" eingestellt wird. Die Einstellbarkeit der Drehrichtung des Elektrowerkzeugs bedeutet im Sinne der Erfindung bevorzugt, dass zwischen den beiden entgegengesetzten Drehrichtungen "mit dem Uhrzeigersinn" und "gegen den Uhrzeigersinn" hin- und hergeschaltet werden kann, je nach Belieben des Nutzers des Elektrowerkzeuggeräts. Ein Beispiel für eine Rotationsrichtung "mit dem Uhrzeigersinn" ist in Fig. 1 dargestellt. Ein Beispiel für eine Rotationsrichtung "gegen den Uhrzeigersinn" ist in Fig. 2 dargestellt, wobei die Drehrichtung jeweils durch den kreisförmigen Pfeil angedeutet wird.

Das Umschalten kann beispielsweise durch das Einstellen eines Schalters bewirkt werden. Diese Einstellung kann zum Beispiel mechanisch erfolgen. Es kann im Sinne der Erfindung auch bevorzugt sein, dass die Einstellung über geänderte "settings" mittels einer Kommunikationsverbindung an das Elektrowerkzeuggerät übertragen werden. Das Ändern von Einstellungen ("settings") kann im Sinne der Erfindung als Betätigung eines Schalters verstanden werden. Der Schalter kann von einer Steuerungseinheit bzw. der Leistungelektronik des Elektrowerkzeuggeräts abgefragt werden. Es kann im Sinne der Erfindung auch bevorzugt sein, dass je nach Schalterstellung die Steuerungssoftware für die Ansteuerung des Motors entsprechend gewählt wird.

Tests haben gezeigt, dass die Rotationsrichtung "im Uhrzeigersinn" besonders bevorzugt ist bei einer Anwendung des Elektrowerkzeuggeräts in Verbindung mit einer Staubabsaugung. Bei der Drehrichtung des Werkzeugs des Elektrowerkzeuggeräts "mit dem Uhrzeigersinn" dreht sich das Werkzeug in einem vorderen Bereich des Geräts vorzugsweise vom zu bearbeitenden Untergrund bzw. vom Nutzer des Elektrowerkzeuggeräts weg. Dadurch kann das zerkleinerte Schneidgut einen Bewegungsimpuls vom Nutzer weg erhalten, so dass der Nutzer durch die Rotationsrichtung des Werkzeugs des Elektrowerkzeuggeräts von vornherein einer verringerten Staubexposition ausgesetzt ist, wenn das Elektrowerkzeuggerät in der Rotationsrichtung "im Uhrzeigersinn" betrieben wird. Es kann im Sinne der Erfindung auch bevorzugt sein, dass das Schneidgut vom bevorzugt glatten Untergrund weg befördert wird. Dadurch wird vorteilhafterweise die Voraussetzung für eine verbesserte und vollständigere Absaugung geschaffen. Es ist im Sinne der Erfindung ganz besonders bevorzugt, dass das Elektrowerkzeuggerät mit einer Staubhaube zusammenwirkt, die dazu eingerichtet ist, das beim Trennen oder Bearbeiten des Untergrundes erzeugte Schneidgut abzusaugen und beispielsweise aus einem Atembereich des Nutzers des Elektrowerkzeuggeräts zu entfernen.

Bei der Rotationsrichtung "gegen den Uhrzeigersinn" ist es im Sinne der Erfindung bevorzugt, dass sich das Werkzeug an dem zu bearbeitenden Untergrund in Richtung des Nutzers des Elektrowerkzeuggeräts dreht. Es ist im Sinne der Erfindung bevorzugt, dass die Drehrichtung des Werkzeuges die Bewegungsrichtung des Anwenders unterstützt. Tests haben gezeigt, dass diese einstellbare Drehrichtung des Werkzeugs bzw. des Elektrowerkzeuggeräts besonders vorteilhaft ist für Anwendungen, die vom Nutzers als sehr belastend wahrgenommen werden. Die Belastung kann beispielsweise dadurch hervorgerufen werden, dass mit einer großen Kraft gearbeitet oder dass eine zeitintensive, langandauernde Arbeit durchgeführt werden muss. Insofern ermöglicht ein Betrieb des Elektrowerkzeuggeräts in der Rotationsrichtung "gegen den Uhrzeigersinn" eine besonders komfortable und für den Nutzer körperlich wenig belastende Arbeit mit dem Elektrowerkzeuggerät. Indem mit der vorliegenden Erfindung eine Einstellbarkeit der Drehrichtung des Werkzeugs des Elektrowerkzeugs ermöglicht wird, kann der Nutzer des Elektrowerkzeuggeräts je nach Anwendungsfall die optimale Rotationsrichtung des Werkzeugs am Elektrowerkzeuggerät einstellen und so vorteilhafterweise besonders staubarm oder mit reduzierter körperlicher Belastung arbeiten.

Es ist im Sinne der Erfindung bevorzugt, dass eine Kühlung des Elektrowerkzeuggeräts im Wesentlichen drehrichtungsunabhängig ausgebildet ist. Mit anderen Worten ist es im Sinne der Erfindung bevorzugt, dass die Kühlung des Elektrowerkzeuggeräts unabhängig von der Rotationsrichtung des Werkzeugs des Elektrowerkzeuggeräts arbeitet und eine Funktionsweise der Kühlung von einem Umschalten der Drehrichtung des Werkzeugs nicht beeinflusst wird. Vorzugsweise ist die Kühlung des Elektrowerkzeuggeräts insbesondere dazu eingerichtet, Komponenten des Elektrowerkzeuggeräts, wie Motor und/oder Leistungselektronik, vor einer Überhitzung zu schützen. Vorzugsweise wird im Kontext der Kühlung des Elektrowerkzeuggeräts ein Fluid an den zu kühlenden Komponenten des Elektrowerkzeuggeräts vorbeigeführt. Bei dem Fluid kann es sich vorzugsweise um ein wasserbasiertes Fluid oder ein Gasgemisch, wie Luft, handeln. Vorzugsweise wird das Fluid in geeigneten Rohren oder Kanälen an den zu kühlenden Komponenten des Elektrowerkzeuggeräts vorbeigeführt, wobei es bedingt durch den Temperaturunterschied zwischen den zu kühlenden Komponenten und dem Kühlfluid zu einem Wärmeaustausch von Motor und/oder Leitungselektronik in Richtung des Kühlfluids kommt. Es war vollkommen überraschend, dass im Kontext der vorliegenden Erfindung auch eine drehrichtungsunabhängige Kühlung des Elektrowerkzeuggeräts bereitgestellt werden kann.

Die Bereitstellung der im Wesentlichen drehrichtungsunabhängigen Kühlung für den Motor des Elektrowerkzeuggeräts kann beispielsweise dadurch ermöglicht werden, dass im Bereich der Kühlung des Elektrowerkzeuggeräts ein Lüfter verwendet wird, der vorzugsweise keine Vorzugsrichtung aufweist. Das bedeutet im Sinne der Erfindung bevorzugt, dass die Elemente auf dem Lüfterrad, die der Führung des Kühlungsfluids dienen, von gerade Rippen gebildet werden können. Gerade Kühlungsrippen geben - anders als gebogene Kühlungsrippen - das Kühlungsfluid nicht in eine bevorzugte Richtung ab, sondern in einer im Wesentlichen radialen Richtung. Dadurch kann die im Kontext des vorgeschlagenen Elektrowerkzeuggeräts vorgeschlagene Kühlung bei Verwendung eines Lüfterrads ohne Vorzugsrichtung im Wesentlichen drehrichtungsunabhängig ausgebildet sein, da auf diese Weise in beiden Betriebsrichtungen des Werkzeugs eine umfassende Kühlung des Motors des Elektrowerkzeuggeräts gewährleistet werden kann. Es kann im Sinne der Erfindung bevorzugt sein, dass diese Kühlleistung für beide Rotationsrichtungen des Werkzeugs im Wesentlichen 100 % beträgt. Es kann aber auch bevorzugt sein, dass an der Kühlung eine Kühlleistung eingestellt werden kann, die kleiner als 100 % ist.

Mit anderen Worten ist es im Sinne der Erfindung bevorzugt, dass an der Kühlung des Elektrowerkzeuggeräts unterschiedliche Kühlleistungen eingestellt werden können, insbesondere in Abhängigkeit von der Rotationsrichtung des Werkzeugs des Elektrowerkzeuggeräts. Dies kann in den Fällen von Vorteil sein, wenn eine erste Betriebsart des Elektrowerkzeuggeräts eine geringere Kühlleistung erfordert als eine zweite Betriebsart des Elektrowerkzeugs. Eine Kühlleistung von weniger als 100 % kann beispielsweise dadurch bereitgestellt werden, dass im Bereich der Kühlung des Elektrowerkzeuggeräts ein Lüfter verwendet wird, der eine nur leicht ausgeprägte Vorzugsrichtung aufweist. Dadurch kann die Kühlung in der Vorzugsrichtung, wenn das Werkzeug des Elektrogeräts beispielsweise in einer ersten Rotationsrichtung betrieben wird, eine 100 %-ige Kühlleistung erreichen und in der Nicht-Vorzugsrichtung eine geringere Kühlleistung, die aber ausreichend ist, um eine Kühlung des Elektrogeräts zu erreichen, wenn das Werkzeug des Elektrogeräts beispielsweise in einer zweiten Rotationsrichtung betrieben wird. Auch eine so an die Erfordernisse angepasste Kühlung soll im Sinne der Erfindung ebenfalls unter den Begriff der "im Wesentlichen drehrichtungsunabhängigen Kühlung" des Elektrogeräts fallen.

Es ist im Sinne der Erfindung bevorzugt, dass das Elektrowerkzeuggerät eine Drehrichtungsanzeige umfasst. Mit anderen Worten umfasst das Elektrowerkzeuggerät vorzugsweise ein Anzeigenmittel für die Drehrichtung des Werkzeugs des Elektrowerkzeuggeräts. Bei dem Anzeigenmittel kann es sich beispielsweise um ein kleines Display, einen Bildschirm oder einen Monitor handeln. Vorzugsweise kann das Anzeigenmittel als Touchbildschirm oder Touchscreen ausgestaltet sein, so dass Eingaben vorteilhafterweise durch Berührung mit einem Finger des Nutzers oder mit einem speziellen Stift vorgenommen werden können. Die Anzeigenmittel können beispielsweise auch Lämpchen oder LEDs umfassen, die beispielsweise unterschiedlich gefärbt sind. Beispielsweise kann eine LED in Farbe A die Rotationsrichtung "gegen den Uhrzeigersinn" anzeigen, während eine LED in Farbe B die Rotationsrichtung "mit dem Uhrzeigersinn" angibt.

Es ist im Sinne der Erfindung ganz besonders bevorzugt, dass das Elektrowerkzeuggerät ein Trennschleifer, ein Diamanttrennschleifer oder ein Winkelschleifer ist. Insofern betrifft die Erfindung insbesondere Trennschleifer, Diamanttrennschleifer oder Winkelschleifer, bei denen in Abkehr vom Stand der Technik die Drehrichtung des Werkzeugs je nach Erfordernis der zu erledigenden Arbeit umgeschaltet werden kann, wobei der Motor des Elektrowerkzeuggeräts ein bürstenlosen Motor ist. Vorzugsweise kann im Kontext der vorliegenden Erfindung zwischen den Drehrichtungen "im Uhrzeigersinn" und "gegen den Uhrzeigersinn" gewählt werden. Dazu kann das Elektrowerkzeuggerät beispielsweise eine Schaltervorrichtung umfassen. Dabei kann es sich beispielsweise um einen Kipp- oder einen Schiebeschalter handeln, der vorzugsweise zwei Schaltstellungen ermöglicht. Vorzugsweise entspricht je eine Schalterstellung einer Drehrichtung des Elektrowerkzeuggeräts.

In einem Ausführungsbeispiel betrifft die Erfindung einen Trenn- oder Winkelschleifer, wobei der Antrieb mit einem bürstenlosen Motor realisiert wird. Das Werkzeug des Trenn- oder Winkelschleifer ist vorzugsweise mit einer für den Anwender wählbaren Drehrichtung ausgestattet, so dass der Nutzer des Elektrowerkzeuggeräts die Rotationsrichtung der Trennscheibe bzw. des Trennblattes am Elektrowerkzeuggerät einstellen bzw. auswählen kann. Dadurch kann vorteilhafterweise ein besonders einfach zu konfigurierender Trenn- oder Winkelschleifer bereitgestellt werden, der aufgrund seiner einstellbaren Werkzeug-Rotationsrichtung besonders nutzerfreundlich ist. Es hat sich gezeigt, dass mit einem Elektrowerkzeuggerät, dessen Werkzeug mit dem Uhrzeigersinn rotiert, eine besonders gute Absaugung des Schneidgutes in Verbindung mit einer entsprechenden Staubhaube für die Absaugung erreicht werden kann. Dazu kann das Elektrowerkzeuggerät bzw. die Staubhaube beispielsweise mit einem Staubsauger oder einem Entstauber verbunden werden. Ferner hat sich gezeigt, dass ein Elektrowerkzeuggerät, dessen Werkzeug gegen den Uhrzeigersinn rotiert, zu einer überraschend geringen Ermüdung des Anwenders führt. Mit anderen Worten kann mit der Erfindung die körperliche Belastung für den Nutzer des Elektrowerkzeuggeräts erheblich reduziert werden, wenn das Werkzeug des Trenn- oder Winkelschleifers gegen den Uhrzeigersinn betrieben wird. Ein weiterer Vorteil der Erfindung besteht darin, dass die Drehrichtung des Werkzeugs des Elektrowerkzeuggeräts insbesondere wählbar ist in Abhängigkeit von der Zugänglichkeit des Untergrundes bzw. des Trennguts.

Es ist im Sinne der Erfindung bevorzugt, dass bei einem bürstenlosen Motor die Drehrichtung des Werkzeugs mit Hilfe einer Softwaresteuerung geändert werden kann. Dabei ist es im Sinne der Erfindung bevorzugt, dass für beide Drehrichtungen des Motors eine ausreichend große Kühlung der Gerätekomponenten ermöglicht wird. Vorzugsweise kann ein bürstenloser Motor mit Netzbetrieb oder auch mit ein oder mehreren Batterien und/oder Akkumulatoren ("Akkus") betrieben werden.

Weitere Vorteile der Erfindung ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausführungsform des Elektrowerkzeuggeräts
- Fig. 2: Ansicht einer weiteren bevorzugten Ausführungsform des Elektrowerkzeuggeräts
- Fig. 3: Ansicht einer bevorzugten Ausführungsform eines Lüfterrads für die drehrichtungsunabhängige Kühlung

### Figurenbeschreibung:

Fig. 1 zeigt ein vorgeschlagenes Elektrowerkzeuggerät (1) mit einem Motor (2) und einem rotierenden Werkzeug (3). Es ist im Sinne der Erfindung ganz besonders bevorzugt, dass es sich beim dem Elektrowerkzeuggerät (1) um einen Trennschleifer, einen Diamanttrennschleifer oder einen Winkelschleifer handelt. Eine Drehrichtung (4) des Werkzeugs (3) kann an dem Elektrowerkzeuggerät (1) eingestellt werden. Der Motor (3) ist ein bürstenloser Motor. Das Elektrowerkzeuggerät (1), das in Fig. 1 abgebildet wird, ist ein Trennschleifer, dessen Trennscheibe (3) sich im Uhrzeigersinn dreht. Dadurch kann Staub oder Schneidgut, das beim Trenn- bzw. Schneidprozess entsteht, so aus dem Arbeitsbereich des Werkzeugs (3) abgeführt werden, dass es vom Nutzer des Elektrowerkzeuggeräts (1) wegbewegt bzw. abtransportiert wird. Das Elektrowerkzeuggerät (1) kann eine Staubhaube umfassen, die vorzugsweise das rotierende Werkzeug (3) umgibt und die vorzugsweise dazu eingerichtet ist, beispielsweise in Verbindung mit einer Staubabsaugvorrichtung, den Staub oder das Schneidgut abzusaugen. Dadurch wird vorteilhafterweise verhindert, dass der Staub vom Nutzer eingeatmet wird und in seine Atemwege gelangt, wo er zu gesundheitlichen Beeinträchtigungen führen kann.

In einer bevorzugten Ausführungsform der Erfindung kann das Elektrowerkzeuggerät (1) eine Kühlung (nicht dargestellt) umfassen. Die Kühlung des Elektrowerkzeuggeräts (1) ist vorzugsweise drehrichtungsunabhängig ausgebildet. Mit anderen Worten kann die Kühlung des Elektrowerkzeuggeräts (1) so ausgebildet sein, dass sie unabhängig von der Rotationsrichtung (4) des Werkzeugs (3) des Elektrowerkzeuggeräts (1) betrieben werden kann. Die Kühlung des Elektrowerkzeuggeräts (1) ist vorzugsweise dazu eingerichtet, solche Komponenten des Elektrowerkzeugs (1) vor einem unerwünschten Überhitzen zu schützen, die besonders relevant für den Betrieb des Elektrowerkzeuggeräts (1) sind, wie zum Beispiel der Motor (2) oder die Leistungselektronik (nicht dargestellt).

In einer bevorzugten Ausführungsform der Erfindung kann das Elektrowerkzeuggerät (1) ein Anzeigenmittel für die Drehrichtung (4) (nicht dargestellt) umfassen. Es ist mit anderen Worten im Sinne der Erfindung bevorzugt, dass das Elektrowerkzeuggerät (1) eine Drehrichtungsanzeige umfasst. Mit dieser Dreh- oder Rotationsrichtungsanzeige kann am Elektrowerkzeuggerät angezeigt werden, welche Drehrichtung (4) des Werkzeugs (3) gerade eingestellt ist. Vorzugsweise befindet sich das Anzeigenmittel an einer Stelle am Elektrowerkzeuggerät (1), die gut für dessen Nutzer einsehbar ist.

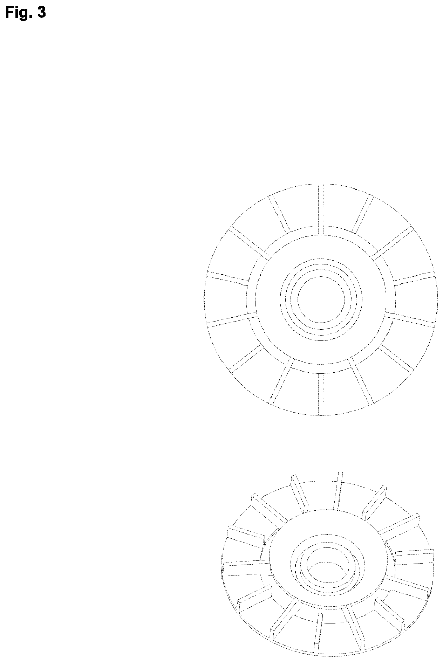

Fig. 3 zeigt eine bevorzugte Ausführungsform eines Lüfterrads für die im Wesentlichen drehrichtungsunabhängige Kühlung. Dabei sind Kühlungsrippen zu sehen, die vorzugsweise radial von einem Mittelpunkt der Lüfterradscheibe nach außen führen. Das in Fig. 3 dargestellte Lüfterrad mit vorzugsweise radial verlaufenden, gerade ausgebildeten Kühlrippen weist vorteilhaftweise keine Vorzugsrichtung beim Transport eines Kühlfluids auf. Dadurch ermöglicht ein Lüfterrad, wie beispielhaft in Fig. 3 dargestellt, dass eine Kühlung innerhalb des Elektrowerkzeuggeräts (1) bereitgestellt werden kann, die für beide Rotationsrichtungen (4) des Werkzeugs (3) des Elektrowerkzeuggeräts (1) verwendet werden kann.

### Bezugszeichenliste

- 1: Elektrowerkzeuggerät, zum Beispiel ein Trennschleifer
- 2: Motor
- 3: Werkzeug
- 4: Drehrichtung

## Patentansprüche

1. Elektrowerkzeuggerät (1) mit einem Motor (2) und einem rotierenden Werkzeug (3)
**dadurch gekennzeichnet, dass**
eine Drehrichtung (4) des Werkzeugs (3) an dem Elektrowerkzeuggerät (1) einstellbar ist und der Motor (3) ein bürstenloser Motor ist.

2. Elektrowerkzeuggerät (1) nach Anspruch 1
**dadurch gekennzeichnet, dass**
eine Kühlung des Elektrowerkzeuggeräts (1) im Wesentlichen drehrichtungsunabhängig ausgebildet ist.

3. Elektrowerkzeuggerät (1) nach Anspruch 1 oder 2
**dadurch gekennzeichnet, dass**
das Elektrowerkzeuggerät (1) ein Anzeigenmittel für die Drehrichtung (4) umfasst. das Elektrowerkzeuggerät (1) eine Drehrichtungsanzeige umfasst.

4. Elektrowerkzeuggerät (1) nach einem der vorhergehenden Ansprüche
**dadurch gekennzeichnet, dass**
das Elektrowerkzeuggerät (1) ein Trennschleifer, ein Diamanttrennschleifer oder ein Winkelschleifer ist.
